# EUROPEAN PATENT SPECIFICATION

(11) **EP 4 026 445 B1**
(45) Date of publication and mention of the grant of the patent: **09.07.2025**
(21) Application number: 20861068.3
(22) Date of filing: 25.08.2020
(51) Int. Cl.: A24F 40/53, A24F 40/57, A24F 40/20

(54) **AEROSOL GENERATING DEVICE AND DATA EXCHANGE METHOD**
AEROSOLERZEUGUNGSVORRICHTUNG UND DATENAUSTAUSCHVERFAHREN
DISPOSITIF DE GÉNÉRATION D'AÉROSOL ET PROCÉDÉ D'ÉCHANGE DE DONNÉES

(30) Priority: 05.09.2019 CN 201910838951
(43) Date of publication of application: 13.07.2022
(73) Proprietor: Shenzhen Smoore Technology Limited, Shenzhen, Guangdong 518102 (CN)
(72) Inventor: CHEN, Haichao, Shenzhen, Guangdong 518102 (CN)
(74) Representative: Herrero & Asociados, S.L.
(86) International application number: PCT/CN2020/111116
(87) International publication number: WO 2021/043028

(56) References cited:
- WO-A1-2019/153642
- WO-A1-2019/162159
- CN-A- 104 933 382
- CN-A- 105 717 812
- CN-A- 109 330 027
- CN-A- 109 512 034
- CN-A- 109 561 732
- CN-A- 109 561 732
- CN-A- 110 623 305
- US-A1- 2017 266 397

## Description

### TECHNICAL FIELD

The present disclosure relates to the field of display technologies, and in particular to an aerosol generating device and a data exchange method.

### BACKGROUND

An existing heated non-combustible aerosol generating device conventionally applies a heating element to heat an aerosol generating substrate to form a continuous smoking effect for a user to inhale. After the inhalation is completed, the user pulls the aerosol generating substrate out of the heating element to realize the separation of the heating element and the aerosol generating substrate.

The aerosol generating substrate may produce a certain amount of adhesive attached to the heating element after heating, forming a bonded state, and the adhesive will remain on the surface of the heating element to accumulate further, resulting in a certain degree of increase in the outer diameter of the heating element, which causes the loss of the heating element loss, thereby affecting the taste of fuming products and reducing the life of the heated non-combustible aerosol generating device.

In WO2019162159 A1, a system for managing a smoking substitute device is disclosed. The system includes a smoking substitute device, which includes a main body and a consumable configured to be physically coupled to the main body; wherein the consumable is associated with validity state information from which it can be determined whether the consumable is valid for use with the main body; wherein the system is configured to determine from the validity state information whether the consumable is valid for use with the main body and, if the system determines from the validity state information that the consumable is not valid for use with the main body, inhibit use of the consumable with the main body. An associated method is also disclosed. In US2017266397 A1, the disclosure includes a system for administering a dosage of an inhalable product to a user including a vaporizing device for converting an active pharmaceutical ingredient (API) into the inhalable product to treat an affliction. The vaporizing device includes a communication element to send/receive at least one piece of dosage data to/from a portable electronic device, the dosage data corresponding to one or more properties of the dosage. The system also includes at least one processor and a memory. Memory includes machine-readable instructions that, when executed by the at least one processor, cause the system to receive an indicator corresponding to the API utilized by the vaporizing device, to determine the dosage for the API utilized by the vaporizing device, to transmit, to the user, instructions for administering the dosage, and to request feedback from the user regarding the efficacy of the dosage.

### SUMMARY OF THE DISCLOSURE

The present invention provides an aerosol generating device and a data exchange method, as set out in the appended claims 1 and 13, to solve the problem of the related art in which heating elements cannot be easily replaced.

The beneficial effect of the present disclosure is that, in contrast to the related art, the present disclosure provides an aerosol generating device including a main body; and a heat generating assembly detachably connected to the main body. The main body includes a second conductive terminal. The heat generating assembly includes a heat generating body and a first conductive terminal connected to the heat generating body. When the first conductive terminal and the second conductive terminal are connected, the main body is configured to supply power to the heat generating body, The heat generating assembly includes first identification information, the first identification information may be configured to be identified by a server. The main body is configured to obtain characteristic parameters provided by the server according to the first identification information and to heat the heat generating assembly according to the characteristic parameters for further heating the aerosol generating substrate with the heat generating assembly to generate aerosol. The characteristic parameters correspond to a type of the heat generating assembly. The characteristic parameters include heat generating body parameters and heating parameters in the heat generating assembly; the heat generating body parameters represent a corresponding relationship between a resistance value and a temperature of the heat generating body of the heat generating assembly. The main body is further configured to detect the resistance value of the heat generating body, determine the temperature of the heat generating body according to the heat generating body parameters, and heat the heat generating assembly according to the temperature of the heat generating body and the heating parameters.

In the above manner, by setting the heat generating assembly in a detachable structure and setting the first identification information on the heat generating assembly, the server can generate corresponding characteristic parameters according to the first identification information. On the one hand, the parts of the aerosol generating device can be replaced at will, reducing the cost of use; and on the other hand, ensuring that when the parts are replaced, they are not replaced with counterfeit parts, which affect the user's use. In addition, the characteristic parameters are protected in the server, reducing the cost of storage media and facilitating the real-time update of the product.

### BRIEF DESCRIPTION OF THE DRAWINGS

To illustrate the technical solutions more clearly in the embodiments of the present disclosure, the following will be briefly described in the description of the embodiments required to use the attached drawings. It is obvious that the following description of the attached drawings are only some of the embodiments of the present disclosure, and those skilled in the art, without creative work, can also obtain other attached drawings based on these drawings.
FIG. 1 is a structural schematic view of an aerosol generating device according to an embodiment of the present disclosure.
FIG. 2 is a schematic view of data interaction between an aerosol generating device and a server according to an embodiment of the present disclosure.
FIG. 3 is a structural schematic view of an aerosol generating device according to another embodiment of the present disclosure.
FIG. 4 is a schematic view of a temperature-time change curve according to an embodiment of the present disclosure.
FIG. 5 is a schematic view of a pulse voltage according to an embodiment of the present disclosure.
FIG. 6 is a structural schematic view of a main body of the aerosol generating device shown in FIG. 1.
FIG. 7 is a structural schematic view of an aerosol generating device according to further another embodiment of the present disclosure.
FIG. 8 is a structural schematic view of a heat generating assembly according to an embodiment of the present disclosure.
FIG. 9 is a structural schematic view of a server according to an embodiment of the present disclosure.
FIG. 10 is a schematic flowchart of a data interaction method according to an embodiment of the present disclosure.

### DETAILED DESCRIPTION

The technical solutions in the embodiments of the present disclosure will be clearly and completely described below in conjunction with the drawings in the embodiments of the present disclosure. It can be understood that the specific embodiments described here are only used to explain the present disclosure, but not to limit the present disclosure. In addition, it should be noted that, for ease of description, the drawings only show a part of the structure related to the present disclosure instead of all the structure. Based on the embodiments in the present disclosure, all other embodiments obtained by those skilled in the art without creative work shall fall within the scope of the present disclosure.

The terms "first", "second", etc. in the present disclosure are intended to distinguish different objects, rather than to describe a specific sequence. In addition, the terms "including" and "having", and any variations thereof are intended to cover non-exclusive inclusions. For example, a process, method, system, product, or device that includes a series of steps or units is not limited to the listed steps or units, but optionally includes unlisted steps or units, or optionally also includes other steps or units inherent to these processes, methods, products, or devices.

Mentioning "embodiments" herein means that a specific feature, structure, or characteristic described in conjunction with the embodiments may be included in at least one embodiment of the present disclosure. The appearance of the phrase in various places in the specification does not necessarily refer to the same embodiment, nor is it an independent or alternative embodiment mutually exclusive with other embodiments. Those skilled in the art clearly and implicitly understand that the embodiments described herein can be combined with other embodiments.

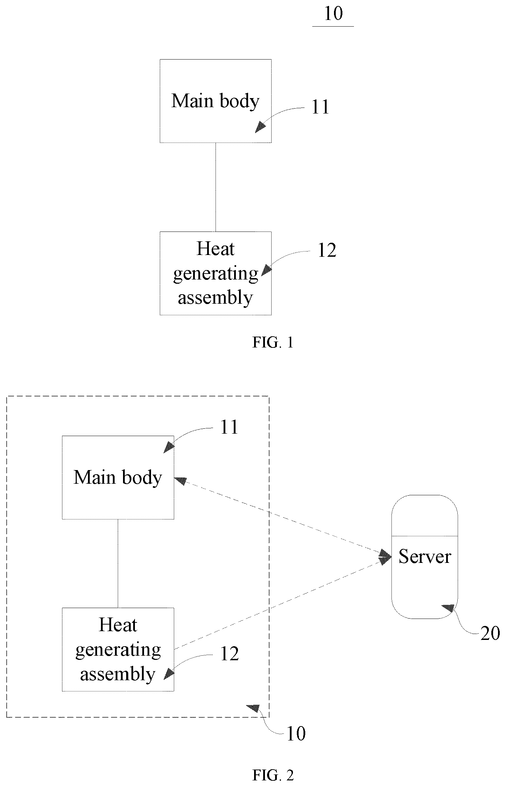

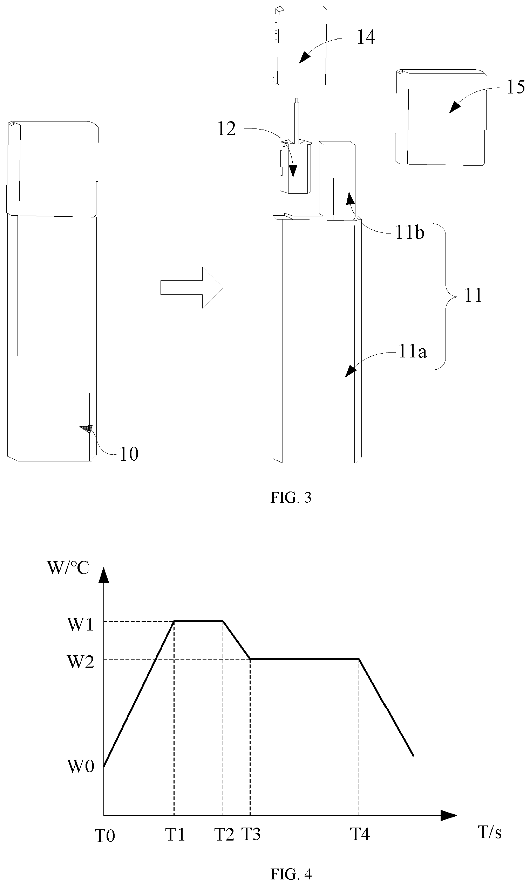

Referring to FIGS. 1-3, FIG. 1 is a structural schematic view of an aerosol generating device according to an embodiment of the present disclosure, FIG. 2 is a schematic view of data interaction between an aerosol generating device and a server according to an embodiment of the present disclosure, and FIG. 3 is a structural schematic view of an aerosol generating device according to another embodiment of the present disclosure. The left half of FIG. 3 shows an overall schematic view of the aerosol generating device 10, and the right half shows a disassembly schematic view thereof. The aerosol generating device 10 includes a main body 11 and a heat generating assembly 12. The main body 11 and the heat generating assembly 12 are detachably connected.

Specifically, the heat generating assembly 12 includes first identification information, and the first identification information may be configured to be identified by a server 20. The main body 11 is configured to obtain characteristic parameters provided by the server 20 according to the first identification information and to heat the heat generating assembly according to the characteristic parameters for further heating the aerosol generating substrate with the heat generating assembly to generate aerosol. The characteristic parameters correspond to a type of the heat generating assembly.

Among them, the characteristic parameters are formed according to different types of heat generating assemblies 12. Due to the influence of factors such as the material, process, and manufacturing device of a heat generating body in the heat generating assemblies 12, its characteristic parameters (such as "temperature T-resistance R" curve, initial resistance value R0, temperature coefficient of resistance (TCR), etc.) are different. During product production, the heat generating assembly 12 is placed in a testing device to test the characteristic parameters of the heat generating assembly 12 of different types.

In some embodiments, the server 20 stores a characteristic parameter-first identification information data packet. After the server 20 obtains the first identification information, the server 20 may unlock the characteristic parameter-first identification information data packet through the first identification information to generate corresponding characteristic parameters and provide to the main body 11.

In other embodiments, the server 20 stores a corresponding algorithm. After the first identification information is input, the characteristic parameters are obtained through the algorithm and provided to the main body 11.

Specifically, the first identification information may be the unique identification information of each heat generating assembly 12 or the unique identification information of the heat generating assemblies 12 of the same type. Therefore, the characteristic parameters obtained according to the first identification information may correspond to a unique heat generating assembly 12.

In other embodiments, the characteristic parameters correspond to heat generating assembly 12 of a type. Since the characteristic parameters are fixed, only the said characteristic parameters can be applied to heat the adapted heat generating assembly 12. When the type of the connected heat generating assembly 12 does not correspond to the type corresponding to the characteristic parameters, the heat generating assembly 12 may not heat the aerosol generating substrate well and the aerosol inhalation taste will become poor. In this way, it is possible to prevent changing the type of the heat generating assembly 12 at will. When the user replaces the heat generating assembly 12, only the heat generating assembly 12 of the same type can be replaced.

In some embodiments, the main body 11 specifically includes a first main body portion 11a and a second main body portion 11b. The first main body portion 11a is configured to accommodate a battery, and the second main body portion 11b is configured to accommodate a controller, etc. and to connect with the heat generating assembly 12. For example, the second main body portion 11b is arranged with a first connector, and the heat generating assembly 12 is arranged with a second connector for connecting the second body portion 11b and the heat generating assembly 12. In some embodiments, the first and second connector may be a buckle, a screw, or the like. In addition, the heat generating assembly 12 may also be connected to the first main body portion 11a through a bottom.

In some embodiments, the aerosol generating device 10 further includes a first cover 14 and a second cover 15 that are detachably connected to the main body 11. When the heat generating assembly 12 is fixedly connected to the main body 11, the first cover 14 may be sleeved on the heat generating assembly 12 to protect the heat generating assembly 12; further, the second cover 15 may be sleeved on the heat generating assembly 12 (or the first cover 14) and the second main body portion 11b for protecting the heat generating assembly 12 and the second main body portion 11b.

In some embodiments, the characteristic parameters include heat generating body parameters and heating parameters in the heat generating assembly 12. The heat generating body parameters represent a corresponding relationship between the resistance value and the temperature of the heat generating body.

Among them, the heat generating body parameters are formed according to different types of heat generating assemblies 12. Due to the influence of factors such as the material, process, and manufacturing device of a heat generating body in the heat generating assembly 12, its characteristic parameters (such as "temperature T-resistance R" curve, initial resistance value R0, temperature coefficient of resistance (TCR), etc.) are different. During product production, the heat generating assembly 12 is placed in a testing device to test the characteristic parameters of the heat generating assembly 12 of different types.

Among them, the heating parameter may specifically be a "temperature-time variation curve" to determine that the heat generating body is heated to different degrees over time. As shown in FIG. 4, FIG. 4 is a schematic view of a temperature-time change curve according to an embodiment of the present disclosure.

For example, the controller may control the temperature of the heat generating body according to a preset temperature-time curve with a PID algorithm. The "temperature-time" curve refers to the heating curve for tobacco.

The following describes embodiments through a specific scenario.

When a user uses the electronic cigarette (aerosol generating device 10) to smoke, he/she may connect the main body 11 and the heat generating assembly 12, and alternatively turn on a switch button arranged on the main body 11. At this time, the electronic cigarette starts to work.

The main body 11 obtains the characteristic parameters in the server 20, obtains the corresponding relationship between the resistance value and the temperature of the heat generating body in the heat generating assembly 12, and starts timing. Then the main body 11 obtains the current resistance value of the heat generating body, obtains the current temperature of the heat generating body based on the heat generating body parameters, and controls the voltage of the heat generating body through the "temperature-time" curve.

It can be understood that, to heat the aerosol substrate (such as tobacco) to obtain a better taste, the required heating temperature is different in different time periods. In some embodiments, as shown in FIG. 3, the abscissa represents time, and the ordinate represents temperature.

In the T0-T1 time period, the heat generating body is heated to increase its temperature from normal temperature WO to temperature W1.

In the T1-T2 time period, the temperature of the heat generating body is kept at W1.

In the T2-T3 time period, the temperature of the heat generating body is decreased from W1 to temperature W2.

In the T3-T4 time period, the temperature of the heat generating body is kept at W2.

After T4, the temperature of the heat generating body is decreased from W2 to normal temperature.

Among them, in a specific embodiment, the value of T1 may be 5-10s, the value of T2 may be 12-18s, the value of W1 may be 320-360°C, and the value of W2 may be 300-340°C.

In an embodiment, T1=7s, T2=15s, W1=340°C, W2=320°C. Suppose that when the temperature of the heat generating body drops by 1°C, its resistance decreases by 2.28mΩ, then when the temperature drops from W1 to W2, that is, when the temperature drops by 20°C, its resistance is required to be lowered by 20*2.28mΩ.

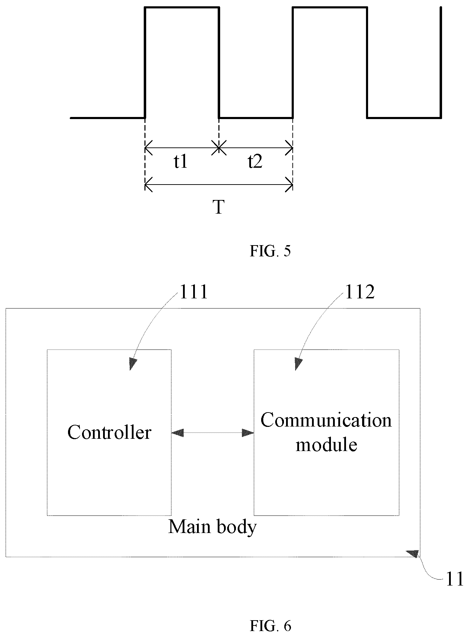

Further, when using electric energy to control the heating temperature of the heat generating body, methods may include changing the pulse frequency and/or pulse amplitude and/or duty cycle of the power supplied to the heat generating body to provide temperature control of the heat generating body, such that the aerosol device may be controlled to release smoke with a better taste. As shown in FIG. 5, FIG. 5 is a schematic view of a pulse voltage according to an embodiment of the present disclosure. For example, when an enable switch is turned on in the t1 time period, and the battery provides electric energy to the heat generating body; the enable switch is closed in the t2 time period, and the battery does not provide electric energy to the heat generating body. Therefore, the temperature of the heat generating body can be adjusted by adjusting the percentage of t1 in the period T. Specifically, increasing the duty ratio of t1, the temperature of the heat generating body increases, and decreasing the duty ratio of t1, the temperature of the heat generating body decreases.

In practical applications, the main body 11 and the heat generating assembly 12 may be sold as a whole, and one or two of the main body 11 and the heat generating assembly 12 may be sold in combination, which can facilitate the user to replace any of the components. For example, the user may purchase the main body 11 and the heat generating assembly 12 at the same time when purchasing for the first time. During use, when the heat generating assembly 12 is worn out and required to be replaced, only the heat generating assembly 12 of the same type as the previous one is required to be purchased.

It is to be noted that when the new heat generating assembly 12 purchased by the user has a different type compared with the worn out one, the main body 11 can still obtain the characteristic parameters corresponding to the heat generating assembly 12 from the server 20 according to the first identification information of the heat generating assembly 12 and heat the heat generating body 12 according to the corresponding characteristic parameters. In this way, even if one of the components is replaced, the heating effect and taste will not be affected.

Through the above method, the user may mix and match at will, rather than buying in a bundle with a poor experience, thus stimulating his/her desire to purchase.

Different from the related art, the aerosol generating device provided in the embodiments includes: a main body; and a heat generating assembly detachably connected to the main body. The heat generating assembly includes first identification information, the first identification information may be configured to be identified by a server. The main body is configured to obtain characteristic parameters provided by the server according to the first identification information and to heat the heat generating assembly according to the characteristic parameters for further heating the aerosol generating substrate with the heat generating assembly to generate aerosol. The characteristic parameters correspond to a type of the heat generating assembly. In the above manner, by setting the heat generating assembly in a detachable structure and setting the first identification information on the heat generating assembly, the server can generate corresponding characteristic parameters according to the first identification information. On the one hand, the parts of the aerosol generating device can be replaced at will, reducing the cost of use; and on the other hand, ensuring that when the parts are replaced, they are not replaced with counterfeit parts, which affect the user's use. In addition, the characteristic parameters are protected in the server, reducing the cost of storage media and facilitating the real-time update of the product.

Referring to FIG. 6, the main body 11 includes a controller 111 and a communication module 112, and the main body 11 can perform data interaction with the server 20 through the communication module 112 to obtain the characteristic parameters.

In a specific embodiment, the main body 11 establishes a data connection with an external terminal, the heat generating assembly 12 sends the first identification information to the server 20 through the external terminal, and the main body 11 further obtains the characteristic parameters obtained by the server 20 according to the first identification information from the server 20 through the external terminal.

Specifically, the external terminal may be a PC terminal, such as a computer, etc., or a mobile terminal, such as a mobile phone, a tablet computer, etc.

In a specific embodiment, the main body 11 may establish a data connection with the external terminal through the communication module 112.

In some embodiments, the communication module 112 may be any one or more of a WIFI communication module, a Bluetooth communication module, or a near field communication (NFC) communication module. The communication module 112 may also be a data interface, etc., and perform data interaction with the external terminal through a data line. The main body 11 performs data interaction with the external terminal through the communication module 112 to obtain the characteristic parameters. The controller 111 heats the heat generating assembly 12 according to the characteristic parameters obtained by the communication module 112.

In a specific embodiment, the first identification information is a serial number. In the replacement process, the server 20 can obtain the serial number and generate related characteristic parameters through the external terminal such as a PC or a mobile terminal as a medium.

In a specific embodiment, the first identification information is a two-dimensional code or/and a barcode. In the replacement process, the server 20 can scan the two-dimensional code or/and barcode through the external terminal such as a mobile terminal as a medium and generate the related characteristic parameters according to the two-dimensional code or/and barcode. Among them, the characteristic parameters stored by the server 20 are generated according to the first identification information.

In a specific embodiment, the communication module 112 is not limited to wireless communication such as a WIFI communication module, a Bluetooth communication module, or NFC, and may also directly perform wired communication through a data line, which is not limited here.

In a specific embodiment, the first identification information may also be RFID tag information with higher security. In the replacement process, the server 20 may obtain the RFID tag information through a RFID identifier as a medium and generate related characteristic parameters. The security of RFID tag information is better, and it is not easy to be plagiarized, replaced, and modified.

In a specific embodiment, the main body 11 may further include second identification information. The second identification information is similar to the first identification information, and may be one or more of a serial number, a two-dimensional code, a barcode, and RFID tag information. The second identification information may also be configured to be identified by the server 20, and the main body is configured to obtain basic parameters generated by the server 20 according to the second identification information, and update and/or upgrade according to the basic parameters.

Specifically, the main body 11 may directly obtain relevant basic parameters from the server 20 directly through its own second identification information, so as to perform a soft update and/or upgrade of itself.

Further, the main body 11 specifically includes a housing assembly and a controller arranged in the housing assembly. The heat generating assembly 12 is detachably connected to the housing assembly. When connected with the housing assembly, the heat generating assembly 12 is electrically connected with the controller. The controller is configured to obtain the characteristic parameters from the server 20 and heat the heat generating assembly 12 according to the characteristic parameters, so as to further use the heat generating assembly 12 to heat the aerosol generating substrate to generate aerosol. The controller is configured to obtain the characteristic parameters from the server 20 with the communication module 112.

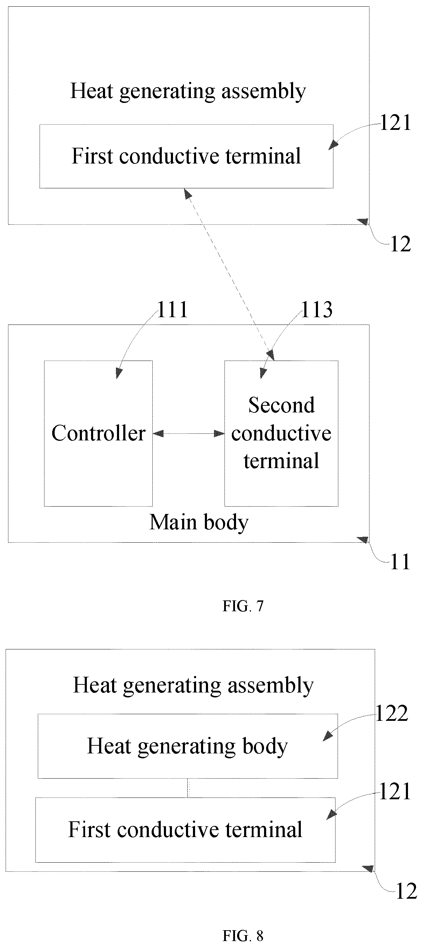

Referring to FIG. 7, FIG. 7 is a structural schematic view of an aerosol generating device according to further another embodiment of the present disclosure. The aerosol generating device 10 includes a main body 11 and a heat generating assembly 12. The main body 11 and the heat generating assembly 12 are detachably connected.

In some embodiments, the heat generating assembly 12 includes a first conductive terminal 121, and the main body 11 includes a controller 111 and a second conductive terminal 113 connected to the controller 111. When the first conductive terminal 121 and the second conductive terminal 113 are connected, the main body 11 can supply power to the heat generating assembly 12. The heat generating assembly 12 specifically includes a heat generating body, and the main body 11 is specifically configured to supply power to the heat generating body.

Referring to FIG. 8, FIG. 8 is a structural schematic view of a heat generating assembly according to an embodiment of the present disclosure. The heat generating assembly 12 includes a first conductive terminal 121 and a heat generating body 122. The heat generating assembly 12 is configured to detachably connect to the main body of the aerosol generating device. When connected to the main body 11, the first conductive terminal 121 is electrically connected to the second conductive terminal 113 of the main body 11.

The heat generating assembly 12 includes first identification information, and the first identification information may be configured to be identified by a server 20. The main body 11 is configured to obtain characteristic parameters provided by the server 20 according to the first identification information and to heat the heat generating assembly 12 according to the characteristic parameters for further heating the aerosol generating substrate with the heat generating assembly 12 to generate aerosol.

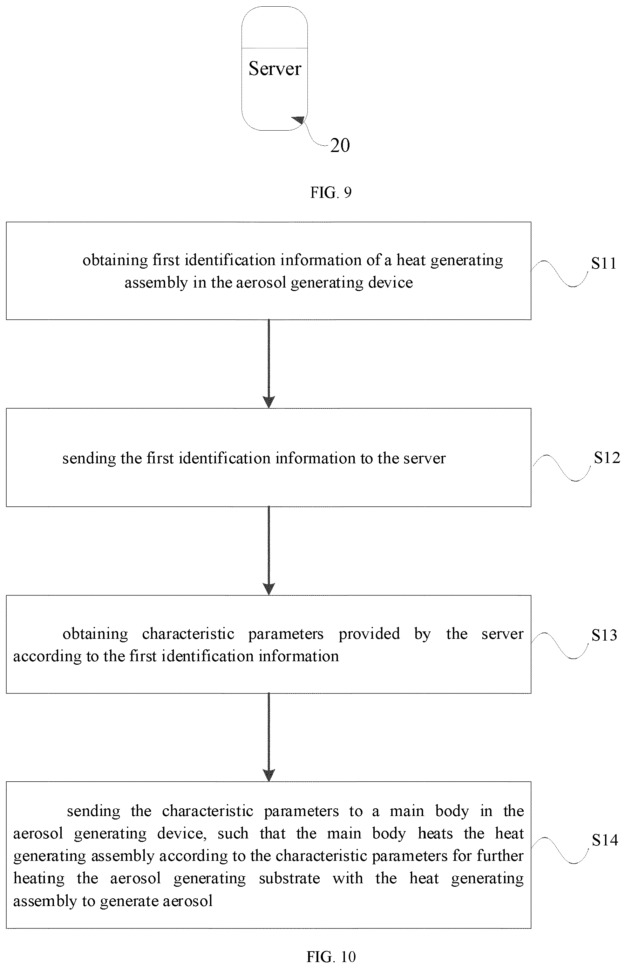

Referring to FIG. 9, the present disclosure further provides a server 20, which is configured for data exchange with the aerosol generating device 10 described in any of the above embodiments.

Specifically, the server 20 is configured to identify the first identification information of the heat generating assembly 12 to provide characteristic parameters, which may be originally stored in the server, although the first identification information is provided after being verified and unlocked. The characteristic parameters may also be generated by calculating the first identification information by a corresponding algorithm, which is not limited herein. The server 20 sends the characteristic parameters to the main body 11, such that the main body 11 heats the heat generating assembly 12 according to the characteristic parameters. In this way, the main body 11 further uses the heat generating body 12 to heat the aerosol generating substrate to generate aerosol, and the characteristic parameters correspond to a type of the heat generating body 12.

It can be understood that the foregoing heat generating assembly and server embodiments are similar to the structure and working principle of the heat generating assembly and server in the foregoing embodiment of the aerosol generating device, and will not be repeated here.

Referring to FIG. 10, FIG. 10 is a schematic flowchart of a data interaction method according to an embodiment of the present disclosure. The data interaction method is specifically applied to an external terminal, and the external terminal may be configured as a medium for data interaction with an aerosol generating device 10 and a server 20.

At block S11: obtaining first identification information of a heat generating assembly in the aerosol generating device.

The first identification information of the heat generating assembly in the aerosol generating device is obtained.

Specifically, the external terminal may be a PC terminal or a mobile terminal, and the aerosol generating device includes a main body and the heat generating assembly. The heat generating assembly has the first identification information.

In a specific embodiment, the first identification information may specifically be a two-dimensional code and/or a barcode, and the mobile terminal may recognize the two-dimensional code and/or barcode to obtain the first identification information.

At block S12: sending the first identification information to the server.

The first identification information is sent to the server.

At block S13: obtaining characteristic parameters provided by the server according to the first identification information.

After the server receives the first identification information, it generates the characteristic parameters accordingly, and the characteristic parameters provided by the server according to the first identification information are obtained.

At block S14: sending the characteristic parameters to a main body in the aerosol generating device, such that the main body heats the heat generating assembly according to the characteristic parameters for further heating the aerosol generating substrate with the heat generating assembly to generate aerosol.

After obtaining the characteristic parameters provided by the server, the characteristic parameters are sent to the main body in the aerosol generating device, such that the main body can heat the heat generating assembly according to the characteristic parameters, and the main body can further use the heat generating assembly to heat the aerosol generating substrate to generate aerosol. The characteristic parameters correspond to a type of the heat generating assembly.

The specific embodiment of the foregoing data exchange method is similar to the foregoing embodiments of the aerosol generating device, and will not be repeated herein.

## Claims

1. An aerosol generating device (10), comprising:
a main body (11), comprising a second conductive terminal (113); and
a heat generating assembly (12), comprising a heat generating body (122) and a first conductive terminal (121) connected to the heat generating body (122); wherein when the first conductive terminal (121) and the second conductive terminal (113) are connected, the main body (11) is configured to supply power to the heat generating body (122);
the heat generating assembly (12) comprises first identification information, and the first identification information is configured to be identified by a server (20);
the main body (11) is configured to obtain characteristic parameters provided by the server (20) according to the first identification information and to heat the heat generating assembly (12) according to the characteristic parameters, for further heating an aerosol generating substrate with the heat generating assembly (12) to generate aerosol; the characteristic parameters correspond to a type of the heat generating assembly (12);
**characterized by**, the characteristic parameters comprise heat generating body parameters and heating parameters in the heat generating assembly (12); the heat generating body parameters represent a corresponding relationship between a resistance value and a temperature of the heat generating body (122) of the heat generating assembly (12);
the main body (11) is further configured to detect the resistance value of the heat generating body (122), determine the temperature of the heat generating body (122) according to the heat generating body parameters, and heat the heat generating assembly (12) according to the temperature of the heat generating body (122) and the heating parameters.

2. The aerosol generating device (10) according to claim 1, wherein the main body (11) establishes a data connection with an external terminal, the heat generating assembly (12) is configured to send the first identification information to the server (20) through the external terminal, and the main body (11) is further configured to obtain the characteristic parameters obtained by the server (20) according to the first identification information from the server (20) through the external terminal.

3. The aerosol generating device (10) according to claim 2, wherein the main body (11) comprises a communication module (112), and the main body (11) is configured to perform data interaction with the external terminal through the communication module (112).

4. The aerosol generating device (10) according to claim 3, wherein the communication module (112) is one or more of a WIFI communication module, a Bluetooth communication module, or a near field communication (NFC) communication module.

5. The aerosol generating device (10) according to claim 3, wherein the communication module (112) is a data interface performing data interaction with the external terminal through a data line.

6. The aerosol generating device (10) according to claim 3, wherein the main body (11) further comprises:
a housing assembly; and
a controller, arranged in the housing assembly;
wherein the heat generating assembly (12) is detachably connected to the housing assembly; when connected with the housing assembly, the heat generating assembly (12) is electrically connected with the controller; the controller is configured to obtain, through the communication module (112), the characteristic parameters from the server (20).

7. The aerosol generating device (10) according to claim 1, wherein the main body (11) comprises a first main body portion (11a) and a second main body portion (11b); the first main body portion (11a) is configured to accommodate a battery, and the second main body portion (11b) is configured to connect with the heat generating assembly (12).

8. The aerosol generating device (10) according to claim 7, wherein the second main body portion (11b) is arranged with a first connector and the heat generating assembly (12) is arranged with a second connector, for connecting the second body portion and the heat generating assembly (12).

9. The aerosol generating device (10) according to claim 8, further comprising a first cover (14) detachably connected to the main body (11); when the heat generating assembly (12) is connected to the main body (11), the first cover (14) is sleeved on the heat generating assembly (12).

10. The aerosol generating device (10) according to claim 9, further comprising a second cover (15) detachably connected to the main body (11); the second cover (15) is sleeved on the heat generating assembly (12) and the second main body portion (11b); or, the second cover (15) is sleeved on the first cover (14) and the second main body portion (11b).

11. The aerosol generating device (10) according to claim 1, wherein the main body (11) comprises second identification information; the second identification information is configured to be identified by the server (20); the main body (11) is configured to obtain basic parameters generated by the server (20) according to the second identification information, and update and/or upgrade according to the basic parameters.

12. The aerosol generating device (10) according to claim 1, wherein the main body (11) is configured to control the temperature of the heat generating body (122) by changing a pulse frequency and/or a pulse amplitude and/or a duty cycle of power supplied to the heat generating body (122).

13. A data interaction method, applied to an external terminal; **characterized in that** the external terminal is configured to perform data interaction with an aerosol generating device (10) and a server (20);
the data interaction method comprises:
obtaining (S11) first identification information of a heat generating assembly (12) in the aerosol generating device (10);
sending (S12) the first identification information to the server (20);
obtaining (S13) characteristic parameters provided by the server (20) according to the first identification information, wherein the characteristic parameters comprise heat generating body parameters and heating parameters in the heat generating assembly (12); the heat generating body parameters represent a corresponding relationship between a resistance value and a temperature of the heat generating body (122) of the heat generating assembly (12); and
sending (S14) the characteristic parameters to a main body (11) in the aerosol generating device (10), wherein the main body (11) is further configured to detect the resistance value of the heat generating body (122), determine the temperature of the heat generating body (122) according to the heat generating body parameters, and heat the heat generating assembly (12) according to the temperature of the heat generating body (122) and the heating parameters..

## Patentansprüche

1. Eine Aerosolerzeugungsvorrichtung (10), umfassend:
einen Hauptkörper (11), umfassend ein zweites leitfähiges Terminal (113); und
eine Wärmeerzeugungseinheit (12), umfassend einen Wärmeerzeugungskörper (122) und ein erstes leitfähiges Terminal (121), das mit dem Wärmeerzeugungskörper (122) verbunden ist; wobei, wenn das erste leitfähige Terminal (121) und das zweite leitfähige Terminal (113) verbunden sind, der Hauptkörper (11) dazu eingerichtet ist, dem Wärmeerzeugungskörper (122) elektrische Energie zuzuführen.
die Wärmeerzeugungseinheit (12) umfasst erste Identifikationsinformationen, die dazu eingerichtet sind, von einem Server (20) identifiziert zu werden;
der Hauptkörper (11) ist dazu eingerichtet, charakteristische Parameter zu erhalten, die vom Server (20) entsprechend den ersten Identifikationsinformationen bereitgestellt werden, und die Wärmeerzeugungseinheit (12) gemäß den charakteristischen Parametern zu erhitzen, um ein Aerosol erzeugendes Substrat mit der Wärmeerzeugungseinheit (12) weiter zu erhitzen, um Aerosol zu erzeugen; die charakteristischen Parameter entsprechen einem Typ der Wärmeerzeugungseinheit (12).
**dadurch gekennzeichnet, dass** die charakteristischen Parameter Wärmeerzeugungskörperparameter und Heizparameter in der Wärmeerzeugungsbaugruppe (12) umfassen; wobei die Parameter des Wärmeerzeugungskörpers eine entsprechende Beziehung zwischen einem Widerstandswert und einer Temperatur des Wärmeerzeugungskörpers (122) der Wärmeerzeugungseinheit (12) darstellen;
der Hauptkörper (11) ist weiterhin dazu eingerichtet, den Widerstandswert des Wärmeerzeugungskörpers (122) zu erfassen, die Temperatur des Wärmeerzeugungskörpers (122) gemäß den Parametern des Wärmeerzeugungskörpers zu bestimmen und die Wärmeerzeugungseinheit (12) gemäß der Temperatur des Wärmeerzeugungskörpers (122) und den Heizparametern zu erhitzen.

2. Die Aerosol-Erzeugungseinheit (10) gemäß Anspruch 1, **dadurch gekennzeichnet, dass** der Hauptkörper (11) eine Datenverbindung mit einem externen Terminal herstellt, die Wärmeerzeugungseinheit (12) so konfiguriert ist, dass sie die erste Identifikationsinformation an den Server (20) über das externe Terminal sendet, und der Hauptkörper (11) ferner so konfiguriert ist, dass er die vom Server (20) gemäß der ersten Identifikationsinformation erhaltenen charakteristischen Parameter über das externe Terminal vom Server (20) abruft.

3. Die Aerosol-Erzeugungseinheit (10) gemäß Anspruch 2, wobei der Hauptkörper (11) ein Kommunikationsmodul (112) umfasst und der Hauptkörper (11) so konfiguriert ist, dass er über das Kommunikationsmodul (112) eine Dateninteraktion mit dem externen Terminal durchführt.

4. Die Aerosol-Erzeugungseinheit (10) gemäß Anspruch 3, wobei das Kommunikationsmodul (112) ein oder mehrere der folgenden umfasst: ein Wi-Fi-Kommunikationsmodul, ein Bluetooth-Kommunikationsmodul oder ein Nahfeldkommunikations-(NFC)-Kommunikationsmodul.

5. Die Aerosol-Erzeugungseinheit (10) gemäß Anspruch 3, wobei das Kommunikationsmodul (112) eine Datenleitung ist, die eine Dateninteraktion mit dem externen Terminal über eine Datenleitung ermöglicht.

6. Die Aerosol-Erzeugungseinheit (10) gemäß Anspruch 3, wobei der Hauptkörper (11) zusätzlich umfasst:
eine Gehäuseeinheit; und
einen Controller, der in der Gehäuseeinheit angeordnet ist;
wobei die Wärmeerzeugungseinheit (12) abnehmbar mit der Gehäuseeinheit verbunden ist; wobei bei der Verbindung mit der Gehäuseeinheit die Wärmeerzeugungseinheit (12) elektrisch mit dem Controller verbunden ist; und
wobei der Controller konfiguriert ist, über das Kommunikationsmodul (112) die charakteristischen Parameter vom Server (20) zu erhalten.

7. Die Aerosol-Erzeugungseinheit (10) gemäß Anspruch 1, wobei der Hauptkörper (11) einen ersten Hauptkörperabschnitt (11a) und einen zweiten Hauptkörperabschnitt (11b) umfasst; wobei der erste Hauptkörperabschnitt (11a) so konfiguriert ist, dass er eine Batterie aufnimmt, und der zweite Hauptkörperabschnitt (11b) so konfiguriert ist, dass er mit der Wärmeerzeugungse
inheit (12) verbunden wird.

8. Die Aerosol-Erzeugungseinheit (10) gemäß Anspruch 7, wobei der zweite Hauptkörperabschnitt (11b) mit einem ersten Verbinder versehen ist und die Wärmeerzeugungseinheit (12) mit einem zweiten Verbinder versehen ist, um den zweiten Hauptkörperabschnitt mit der Wärmeerzeugungseinheit (12) zu verbinden.

9. Die Aerosol-Erzeugungseinheit (10) gemäß Anspruch 8, wobei zusätzlich eine erste Abdeckung (14) vorgesehen ist, die lösbar mit dem Hauptkörper (11) verbunden ist; wenn die Wärmeerzeugungseinheit (12) mit dem Hauptkörper (11) verbunden ist, ist die erste Abdeckung (14) über die Wärmeerzeugungseinheit (12) gestülpt.

10. Die Aerosol-Erzeugungseinheit (10) gemäß Anspruch 9, wobei zusätzlich eine zweite Abdeckung (15) vorgesehen ist, die lösbar mit dem Hauptkörper (11) verbunden ist; wobei die zweite Abdeckung (15) über die Wärmeerzeugungseinheit (12) und den zweiten Hauptkörperabschnitt (11b) gestülpt ist; oder wobei die zweite Abdeckung (15) über die erste Abdeckung (14) und den zweiten Hauptkörperabschnitt (11b) gestülpt ist.

11. Die Aerosol-Erzeugungseinheit (10) gemäß Anspruch 1, wobei der Hauptkörper (11) zweite Identifikationsinformationen umfasst; wobei die zweiten Identifikationsinformationen vom Server (20) identifiziert werden können; wobei der Hauptkörper (11) konfiguriert ist, auf der Grundlage der zweiten Identifikationsinformationen vom Server (20) erzeugte Basisparameter zu erhalten und gemäß den Basisparametern zu aktualisieren und/oder aufzurüsten.

12. Die Aerosol-Erzeugungseinheit (10) gemäß Anspruch 1, wobei der Hauptkörper (11) so konfiguriert ist, dass er die Temperatur des Wärmeerzeugungskörpers (122) durch Änderung der Pulsfrequenz und/oder der Pulsamplitude und/oder des Tastverhältnisses der dem Wärmeerzeugungskörper (122) zugeführten Leistung steuert.

13. Ein Dateninteraktionsverfahren, anwendbar auf ein externes Terminal; **dadurch gekennzeichnet, dass** das externe Terminal konfiguriert ist, eine Dateninteraktion mit einer Aerosolgenerierungseinrichtung (10) und einem Server (20) durchzuführen;
wobei das Dateninteraktionsverfahren umfasst:
Erhalten (S11) erster Identifikationsinformationen einer Wärmeerzeugungseinheit (12) im Aerosol-Generierungsgerät (10);
Senden (S12) der ersten Identifikationsinformationen an den Server (20);
Erhalten (S13) charakteristischer Parameter, die vom Server (20) gemäß den ersten Identifikationsinformationen bereitgestellt werden, wobei die charakteristischen Parameter Wärmeerzeugungskörperparameter und Heizparameter in der Wärmeerzeugungseinheit (12) umfassen; die Wärmeerzeugungskörperparameter eine entsprechende Beziehung zwischen einem Widerstandswert und einer Temperatur des Wärmeerzeugungskörpers (122) der Wärmeerzeugungseinheit (12) darstellen; und
Senden (S14) der charakteristischen Parameter an einen Hauptkörper (11) im Aerosol-Generierungsgerät (10), wobei der Hauptkörper (11) ferner konfiguriert ist, den Widerstandswert des Wärmeerzeugungskörpers (122) zu detektieren, die Temperatur des Wärmeerzeugungskörpers (122) gemäß den Wärmeerzeugungskörperparametern zu bestimmen und die Wärmeerzeugungseinheit (12) gemäß der Temperatur des Wärmeerzeugungskörpers (122) und den Heizparametern zu heizen.

## Revendications

1. Dispositif de génération d'aérosol (10), comprenant :
un corps principal (11) comprenant une seconde borne conductrice (113) ; et
un ensemble générateur de chaleur (12) comprenant un corps de génération de chaleur (122) et une première borne conductrice (121) connectée audit corps de génération de chaleur (122) ;
dans lequel, lorsque la première borne conductrice (121) et la seconde borne conductrice (113) sont connectées, le corps principal (11) est configuré pour alimenter en énergie le corps chauffant (122).
l'ensemble de génération de chaleur (12) comprend une première information d'identification, et la première information d'identification est configurée pour être reconnue par un serveur (20) ;
le corps principal (11) est configuré pour obtenir des paramètres caractéristiques fournis par le serveur (20) en fonction de la première information d'identification et pour chauffer l'ensemble de génération de chaleur (12) selon lesdits paramètres caractéristiques, afin de chauffer davantage un substrat de génération d'aérosols au moyen de l'ensemble de génération de chaleur (12) de manière à générer des aérosols ; les paramètres caractéristiques correspondant à un type de l'ensemble de génération de chaleur (12);
**caractérisé en ce que** les paramètres caractéristiques comprennent des paramètres du corps de génération de chaleur et des paramètres de chauffage dans l'ensemble de génération de chaleur (12) ; les paramètres du corps de génération de chaleur représentent une relation de correspondance entre une valeur de résistance et une température du corps de génération de chaleur (122) de l'ensemble de génération de chaleur (12).
le corps principal (11) est en outre configuré pour détecter la valeur de résistance du corps de génération de chaleur (122), déterminer la température du corps de génération de chaleur (122) en fonction des paramètres du corps de génération de chaleur, et chauffer l'ensemble de génération de chaleur (12) en fonction de la température du corps de génération de chaleur (122) et des paramètres de chauffage.

2. Le dispositif de génération d'aérosols (10) selon la revendication 1, dans lequel le corps principal (11) établit une connexion de données avec un terminal externe, l'ensemble de génération de chaleur (12) étant configuré pour envoyer les premières informations d'identification au serveur (20) via le terminal externe, et le corps principal (11) étant en outre configuré pour obtenir les paramètres caractéristiques obtenus par le serveur (20) en fonction des premières informations d'identification, à partir du serveur (20) via le terminal externe.

3. Le dispositif de génération d'aérosols (10) selon la revendication 2, dans lequel le corps principal (11) comprend un module de communication (112), et le corps principal (11) est configuré pour effectuer une interaction de données avec le terminal externe par l'intermédiaire du module de communication (112).

4. Le dispositif de génération d'aérosols (10) selon la revendication 3, dans lequel le module de communication (112) est un ou plusieurs modules parmi un module de communication WIFI, un module de communication Bluetooth, ou un module de communication en champ proche (NFC).

5. Le dispositif de génération d'aérosols (10) selon la revendication 3, dans lequel le module de communication (112) est une interface de données assurant une interaction de données avec le terminal externe via une ligne de données.

6. Le dispositif de génération d'aérosols (10) selon la revendication 3, dans lequel le corps principal (11) comprend en outre :
un ensemble de boîtier ; et
un module de commande, disposé dans l'ensemble de boîtier ;
dans lequel l'ensemble de génération de chaleur (12) est connecté de manière démontable à l'ensemble de boîtier ; lorsqu'il est connecté à l'ensemble de boîtier, l'ensemble de génération de chaleur (12) est électriquement connecté au module de commande ; le module de commande est configuré pour obtenir, via le module de communication (112), les paramètres caractéristiques depuis le serveur (20).

7. Le dispositif de génération d'aérosols (10) selon la revendication 1, dans lequel le corps principal (11) comprend une première partie de corps principal (11a) et une deuxième partie de corps principal (11b) ; la première partie de corps principal (11a) est configurée pour loger une batterie, et la deuxième partie de corps principal (11b) est configurée pour être connectée à l'ensemble de génération de chaleur (12).

8. Le dispositif de génération d'aérosols (10) selon la revendication 7, dans lequel la deuxième partie de corps principal (11b) est pourvue d'un premier connecteur et l'ensemble de génération de chaleur (12) est pourvu d'un second connecteur, permettant de connecter la deuxième partie de corps principal et l'ensemble de génération de chaleur (12).

9. Le dispositif de génération d'aérosols (10) selon la revendication 8, comprenant en outre un premier couvercle (14) connecté de manière démontable au corps principal (11) ; lorsque l'ensemble de génération de chaleur (12) est connecté au corps principal (11), le premier couvercle (14) est inséré entourant l'ensemble de génération de chaleur (12).

10. Le dispositif de génération d'aérosols (10) selon la revendication 9, comprenant en outre un second couvercle (15) connecté de manière démontable au corps principal (11) ; le second couvercle (15) est inséré entourant l'ensemble de génération de chaleur (12) et la deuxième partie du corps principal (11b) ; ou bien, le second couvercle (15) est inséré entourant le premier couvercle (14) et la deuxième partie du corps principal (11b).

11. Le dispositif de génération d'aérosols (10) selon la revendication 1, dans lequel le corps principal (11) comprend une seconde information d'identification ; ladite seconde information d'identification est configurée pour être identifiée par le serveur (20) ; le corps principal (11) est configuré pour obtenir, auprès du serveur (20), des paramètres de base générés en fonction de la seconde information d'identification, et pour effectuer une mise à jour et/ou une amélioration selon lesdits paramètres de base.

12. Le dispositif de génération d'aérosols (10) selon la revendication 1, dans lequel le corps principal (11) est configuré pour contrôler la température du corps de génération de chaleur (122) en modifiant la fréquence d'impulsions et/ou l'amplitude d'impulsions et/ou le cycle de service de l'alimentation électrique fournie au corps de génération de chaleur (122).

13. Procédé d'interaction de données, appliqué à un terminal externe, **caractérisé en ce que** le terminal externe est configuré pour effectuer une interaction de données avec un dispositif de génération d'aérosols (10) et un serveur (20) ;
le procédé d'interaction de données comprend :
obtention (S11) des premières informations d'identification d'un ensemble de génération de chaleur (12) dans le dispositif de génération d'aérosols (10) ;
envoi (S12) des premières informations d'identification au serveur (20) ;
obtention (S13) des paramètres caractéristiques fournis par le serveur (20) selon la première information d'identification, les paramètres caractéristiques comprenant des paramètres du corps de génération de chaleur et des paramètres de chauffage dans l'ensemble de génération de chaleur (12) ; les paramètres du corps de génération de chaleur représentant une relation correspondante entre une valeur de résistance et une température du corps de génération de chaleur (122) de l'ensemble de génération de chaleur (12) ; et
envoi (S14) des paramètres caractéristiques au corps principal (11) de l'appareil de génération d'aérosols (10), le corps principal (11) étant en outre configuré pour détecter la valeur de résistance du corps de génération de chaleur (122), déterminer la température du corps de génération de chaleur (122) selon les paramètres du corps de génération de chaleur, et chauffer l'ensemble de génération de chaleur (12) en fonction de la température du corps de génération de chaleur (122) et des paramètres de chauffage.
